# FASCICULE DE BREVET EUROPEEN

(11) **EP 1 965 040 B1**
(45) Date de publication et mention de la délivrance du brevet: **12.04.2017**
(21) Numéro de dépôt: 08101420.1
(22) Date de dépôt: 08.02.2008
(51) Int. Cl.: F01D 25/02, F02C 7/047

(54) **Système de dégivrage à l'huile du cône avant d'un turboréacteur d'avion**
Enteisungssystem mittels Öl des Bugkonus eines Flugzeug-Turbostrahltriebwerks
De-icing System of the nose cone of an airplane jet engine using oil

(30) Priorité: 14.02.2007 FR 0753239
(43) Date de publication de la demande: 03.09.2008
(73) Titulaire: SOCIETE NATIONALE D'ETUDE ET DE CONSTRUCTION DE MOTEURS D'AVIATION -Snecma, F-75015 Paris (FR)
(72) Inventeur: Gauthier, Gérard, Philippe, 77430, Champagne sur Seine (FR); Gille, Laurent, 77190, Dammarie Les Lys (FR); Morreale, Serge, René, 77390, Guignes (FR); Picart, Jean-Yves, 77190, Dammarie Les Lys (FR)
(74) Mandataire: Ilgart, Jean-Christophe

(56) Documents cités:
- WO-A-2005/073539
- DE-B- 1 281 270
- FR-A1- 2 216 442
- US-A- 5 272 868

## Description

### DOMAINE TECHNIQUE

L'invention concerne un système de dégivrage du cône avant d'un turboréacteur d'avion, ledit turboréacteur comportant un palier qui supporte en rotation et en butée un arbre de compresseur basse pression creux d'axe Z-Z du moteur, ledit palier étant lubrifié à l'huile au moyen de deux gicleurs.

Dans certaines phases de vol (montée, descente, approche) des conditions atmosphériques dites « givrantes » peuvent être rencontrées si la température ambiante devient inférieure ou égale à zéro Celsius et en présence d'eau en surfusion dans les nuages. Ces conditions peuvent conduire à des dépôts de givre inacceptables sur le cône avant et nécessiter la mise en place d'un système de dégivrage de celui-ci.

Actuellement, les cônes avant des turboréacteurs d'avion sont dégivrés à l'air. Une partie de l'air qui a été comprimée, et donc échauffée, dans le compresseur à basse pression est prélevée par une ou des canalisations. Cet air est injecté à proximité du sommet du cône. Sous l'effet de la pression il circule le long de ce cône à l'intérieur d'une double peau en réchauffant le cône, ce qui a pour effet de le dégivrer. L'air sort ensuite du cône par des perçages formés à sa base. Le document US 3 925 979 décrit un dispositif de ce type.

Un dispositif de ce type présente des inconvénients.

Le prélèvement d'air constitue une fuite qui fait chuter le rendement du moteur. C'est pourquoi ce dispositif ne fonctionne que lorsque les conditions sont givrantes, c'est-à-dire par intermittence. Il faut donc prévoir des détecteurs et des vannes de régulation pour fermer le prélèvement en dehors des conditions givrantes.

On connaît également (US 3,420,311) un rotor aubagé qui comporte un cône avant creux porté par un moyeu du rotor. Un conduit pour un liquide sous pression, par exemple de l'huile, traverse le moyeu et une valve de décharge est positionnée à proximité d'une surface intérieure du nez du cône de telle sorte que le liquide s'écoulant à partir de la valve de décharge percute d'abord le cône avant de passer, sous l'effet de la force centrifuge, le long de la surface intérieure. L'échange de chaleur entre le liquide et le cône avant a pour effet de chauffer ce dernier afin d'éviter son givrage.

Ce type d'alimentation avec de l'huile sous pression nécessite des systèmes d'étanchéité entre parties fixes et parties tournantes. Les joints d'étanchéité dynamiques ont une durée de vie limitée, ce qui conduit inévitablement à des fuites. Un autre inconvénient réside dans le niveau de pression d'huile à atteindre pour ouvrir la valve de décharge. A moins d'une régulation ou d'une pompe dédiée spécifiquement à cette fonction, il paraît difficile d'obtenir le niveau de pression compatible avec le besoin de dégivrage du cône.

Dans le document FR 2 216 442 un autre système de dégivrage est décrit.

La présente invention a pour objet un système de dégivrage du cône avant d'un turboréacteur d'avion qui remédie à ces inconvénients. Ces buts sont atteints par l'invention, qui est définie dans la revendication 1. Le système de dégivrage comporte :
- un tube d'alimentation solidaire du cône avant du moteur, ce tube reliant l'arbre de compresseur basse pression au cône du moteur et ayant un rayon (r) ;
- une peau doublant la paroi du cône avant du moteur en laissant un passage pour la circulation d'huile ;
- une pluralité de tubes radiaux de retour d'huile disposés entre la partie la plus excentrée de la peau par rapport à l'axe Z-Z et le palier pour assurer le retour de l'huile vers le palier ;
- le retour de l'huile dans le palier étant situé à une distance (R) plus grande de l'axe Z-Z que le rayon (r) du tube d'alimentation.

Grâce à ces caractéristiques :
- il n'y a pas de prélèvement d'air en sortie de compresseur, de sorte que le rendement du moteur est amélioré. Le gains en consommation spécifique est de 0,16% en condition givrante car il n'y a pas de perte de performances due à des prélèvements d'air dans le compresseur.
- la circulation d'huile fonctionne en permanence, que les conditions extérieures soient givrantes ou non. Il n'est par conséquent pas nécessaire de prévoir des moyens pour mettre en fonction et pour interrompre le système de dégivrage. En particulier il n'est pas nécessaire de prévoir des vannes de régulation, ce qui se traduit par une simplication du dispositif et un gain de masse.

- une huile de lubrification est refroidie. La température de fonctionnement du palier est donc abaissée.
- il n'y a pas d'huile dédiée spécifiquement à la fonction de dégivrage. La pompe d'alimentation est donc inchangée ;
- le retour de l'huile de dégivrage se fait par l'enceinte avant. Il n'y a donc pas de pollution ;
- le couple air/huile assure un meilleur échange thermique que le couple air/air car les caractéristiques physiques de l'huile sont supérieures à celles de l'air.

Dans une réalisation préférée, l'arbre de compresseur basse pression comporte un nombre pair de lumières séparées par un nombre pair d'espaces inter-lumières, les gicleurs étant dirigés vers les lumières et vers le cône de manière que le jet d'huile des gicleurs puisse les traverser, les gicleurs étant disposés par rapport à ces lumières, de telle sorte que l'un des gicleur commence à éjecter de l'huile dans une lumière au moment où le jet de l'autre gicleur commence à être réfléchi par un espace inter-lumières.

Grâce à ces caractéristiques, le palier est alimenté en continu en huile et de même, le système de dégivrage est alimenté en continu en huile.

Avantageusement, l'angle d'inclinaison du gicleur par rapport à l'axe Z-Z de l'arbre de compresseur basse pression est compris entre 5° et 30°.

Avantageusement encore, le tube d'alimentation présente une conicité comprise entre 0° et 2°, la partie de plus grand diamètre du cône étant située du côté du cône avant du moteur.

Avantageusement, le tube d'alimentation comporte un ressaut dans sa partie située vers l'arbre de compresseur basse pression.

Selon un mode de réalisation particulier, le système de dégivrage comporte une écope centrifuge dont la fonction est de récupérer l'huile qui a été réfléchie par les espaces inter-lumières de l'arbre basse pression et de diriger cette huile vers le palier.

En cas de débit d'huile, dans l'espace dédié au dégivrage du cône, inférieur au débit d'un gicleur, l'huile déborde par-dessus le ressaut et rejoint l'écope centrifuge sous l'effet de la force centrifuge.

Ainsi, dans des conditions particulières de fonctionnement, par exemple en cas de viscosité de l'huile importante liée à de très faibles températures, le dispositif permet le refroidissement du palier sans aucun déficit d'huile.

Selon un autre aspect, l'invention concerne un turboréacteur d'avion qui comporte un système de dégivrage à l'huile de son cône avant conforme à la présente invention.

D'autres caractéristiques et avantages de l'invention apparaîtront encore à la lecture de la description qui suit d'un exemple de réalisation donné à titre purement illustratif en référence aux figures annexées. Sur ces figures :
- la figure 1 est une vue en coupe schématique d'un système de dégivrage conforme à la présente invention ;
- la figure 2 est une vue en coupe schématique selon la ligne II-II de la figure 1 ;
- la figure 3 est une vue schématique similaire à la figure 1 mais qui illustre l'état du dispositif en cas de débit inférieur au débit d'un gicleur.

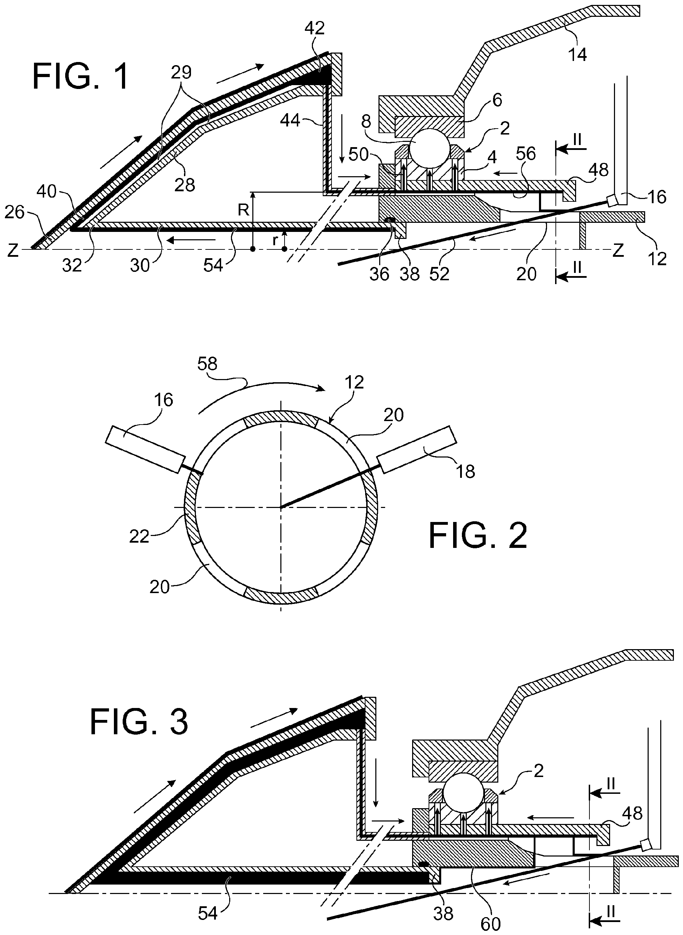

Sur la figure 1, la référence 2 désigne un palier à billes. Il comporte une bague intérieure 4, une bague extérieure 6 et des billes 8. Il comporte un axe de rotation Z-Z qui est en même temps un axe de symétrie. La référence 12 désigne l'arbre à basse pression du turboréacteur. La bague intérieure 4 du roulement à billes 2 est montée sur l'arbre à basse pression 12 tandis que la bague extérieure 6 de ce roulement à billes est montée sur un carter 14.

Afin d'alimenter le palier 2 en huile de lubrification et de refroidissement, deux gicleurs 16 et 18 ont été prévus (voir figure 2). Des lumières 20 ont été formées dans l'arbre à basse pression 12. Ces lumières sont en nombre pair, 4 dans l'exemple de réalisation représenté. Les lumières 20 sont séparées les unes des autres par des espaces inter-lumières 22. Dans l'exemple de réalisation représenté, les espaces inter-lumières sont égaux aux lumières. Toutefois, cette caractéristique n'est pas impérative et, dans une variante de réalisation, les lumières pourraient être plus petites ou plus grandes que les espaces inter-lumières.

Sur la partie gauche de la figure 1, on a représenté la paroi 26 du cône avant à dégivrer. La paroi 26 est doublée d'une paroi 28. Les parois 26 et 28 délimitent ainsi entre elles un espace 29 pour la circulation de l'huile. Un tube d'alimentation 30 est solidaire à une extrémité du cône avant 26, tandis que son autre extrémité, délimitée par un ressaut 38, est centrée à l'intérieur de l'arbre basse pression 12. Un joint 36 assure une étanchéité entre cette extrémité et l'arbre basse pression.

A son extrémité centrée dans l'arbre basse pression, le tube 30 comporte un ressaut 38 qui a pour fonction, on y reviendra ultérieurement, de créer un film d'huile épais à l'intérieur du tube d'alimentation 30.

Le passage pour la circulation de l'huile 29 comporte une première extrémité 40 en communication avec le tube d'alimentation 30. Cette première extrémité est située très proche de l'axe de rotation Z-Z de l'arbre à basse pression. Le passage 29 pour la circulation de l'huile comporte une deuxième extrémité 42 située radialement vers l'extérieur à une plus grande distance de l'axe Z-Z. La paroi du cône avant à dégivrer s'étend entre les extrémités 40 et 42 du passage 29 pour la circulation d'huile. A partir de l'extrémité 42 des tubes radiaux de retour d'huile 44 permettent de ramener l'huile vers la bague intérieure 4 du palier 2. D'autre part, une écope centrifuge de récupération d'huile 48 est prévue entre la bague intérieure 4 du palier 2 et l'arbre basse pression. Cette écope centrifuge 48 est traversée par des trous 50 qui permettent l'alimentation du palier en huile. Comme on peut le voir sur la figure 1, l'écope centrifuge 48 se prolonge vers la droite (selon la figure 1) de manière à recouvrir la plus grande partie de la lumière 20.

L'alimentation en huile du tube d'alimentation 30 se fait lorsque l'un des gicleurs, par exemple le gicleur 16 dans la position représentée sur la figure 1, se trouve en regard d'une lumière 20. A ce moment, le gicleur 16 délivre un jet 52 qui traverse la lumière 20 vers le cône, passe au-dessus du ressaut 38 et s'engage à l'intérieur du tube d'alimentation 30 en formant un film d'huile épais 54 sur la paroi intérieure du tube d'alimentation 30. Grâce au ressaut 38, l'huile pénètre ensuite dans le passage 29 par l'extrémité 40, parcourt la paroi du cône avant à dégivrer de l'extrémité 40 à l'extrémité 42, sort par les tubes radiaux de retour d'huile 44 avant de venir lubrifier le palier en traversant l'écope centrifuge et la bague intérieure du roulement par les canaux d'alimentation 50. Il est à remarquer que dans cette circulation l'huile est mue par la force centrifuge. En effet, le rayon interne r du tube d'alimentation 30 est plus petit que la distance R qui sépare l'axe Z-Z du point d'entrée des tubes radiaux 44 de retour d'huile dans le palier 2. On observe aussi que l'huile a deux fonctions distinctes. D'une part elle sert à dégivrer le cône avant. D'autre part, elle a pour fonction la lubrification et le refroidissement du palier 2.

Lorsque, contrairement au cas précédent, l'un des gicleurs se trouve en regard d'un espace inter-lumières, le faisceau d'huile 52 est réfléchi par la surface extérieure de cet espace inter-lumière pour être capté par l'écope centrifuge 48, puis dirigé sous l'effet de la force centrifuge vers les canaux d'alimentation 50 afin de lubrifier et refroidir le palier 2. On constate que dans ce cas, l'huile n'exerce qu'une seule fonction, à savoir la lubrification du palier, sans participer au dégivrage du cône avant.

On a représenté sur la figure 2 une réalisation préférée de la disposition des lumières 20 et des espaces inter-lumières 22. Dans cette réalisation particulière, il y a quatre lumières 20 et quatre espaces inter-lumières 22. Les espaces inter-lumières sont égaux aux lumières de telle sorte que l'angle au centre des lumières et des espaces inter-lumières est égal à 45°. D'autre part, les deux gicleurs 16 et 18 situés à l'extérieur de l'arbre de compresseur ont été réalisés de manière à assurer la continuité du débit aussi bien en ce qui concerne le dégivrage de la paroi avant du cône que l'alimentation en huile directe du palier 2. La flèche 58 indique le sens de rotation de l'arbre de compresseur basse pression 12. Comme on peut le constater sur la figure 2, l'un des gicleurs (le gicleur 16 sur la figure 2) arrive en regard de l'espace inter-lumières 22 au moment où un autre gicleur (le gicleur 18 sur la figure 2) arrive en regard d'une lumière 20. Lorsque le gicleur 16 a fini de parcourir l'espace inter-lumières 22, le gicleur 18 a fini de parcourir l'espace de la lumière 20 et les rôles des deux gicleurs s'inversent. C'est au tour du gicleur 16 d'être en regard de la lumière tandis que c'est au tour du gicleur 18 d'être en regard d'un espace inter-lumières 20. On assure ainsi, en permanence, une alimentation en continu aussi bien du tube d'alimentation solidaire du cône avant et donc de la paroi du cône avant à dégivrer que l'alimentation directe du palier 2 en huile de lubrification. On observe ainsi que la totalité de l'huile assure la lubrification du palier 2 tandis que la moitié seulement de la quantité d'huile délivrée par les gicleurs 16 et 18 est utilisée pour le dégivrage de la paroi du cône avant. Naturellement, cette proportion est donnée seulement à titre d'exemple et il va de soi que dans des variantes de réalisation un pourcentage d'huile supérieur ou inférieur à 50% peut être utilisé pour assurer le dégivrage du cône avant.

En principe, la section du passage d'huile 29 ainsi que le diamètre et le nombre des tubes radiaux de retour d'huile 44 doivent être capables du débit d'un gicleur. Néanmoins, on peut envisager, dans des conditions particulières de fonctionnement, par exemple en cas de viscosité de l'huile importante liée à de très faibles températures, que cette capacité soit amoindrie. Dans ce cas, comme représenté sur la figure 3, le film d'huile 54 s'épaissit jusqu'à atteindre la hauteur du ressaut 38, déborder ce ressaut, et s'écouler en un film 60 qui retourne dans l'écope centrifuge 48 et enfin lubrifier directement le palier 2. Dans ces circonstances particulières, malgré la moindre fraction d'huile utilisée pour le dégivrage du cône avant, la totalité de l'huile est également utilisée pour la lubrification du palier.

## Revendications

1. Système de dégivrage du cône avant d'un turboréacteur d'avion, comportant un palier (2) et un arbre de compresseur basse pression (12) creux d'axe Z-Z supporté en rotation et en butée par ledit palier, ledit palier (2) étant lubrifié à l'huile au moyen de deux gicleurs (16, 18) situés à l'extérieur de l'arbre de compresseur, le système de dégivrage en outre comprenant:
- un tube d'alimentation d'huile (30) solidaire du cône avant (26) du moteur, ce tube reliant l'arbre de compresseur basse pression (12) au cône du moteur et ayant un rayon (r) ;
- une peau (28) doublant la paroi (26) du cône avant du moteur en laissant un passage (29) pour la circulation de l'huile ;
- une pluralité de tubes radiaux (44) de retour d'huile disposés entre la partie la plus excentrée de la peau par rapport à l'axe Z-Z et le palier pour assurer le retour de l'huile vers le palier (2) ;
- le retour de l'huile dans le palier étant situé à une distance (R) plus grande de l'axe Z-Z que le rayon (r) du tube d'alimentation (30).

2. Système de dégivrage selon la revendication 1, **caractérisé en ce que** l'arbre de compresseur basse pression (12) comporte un nombre pair de lumières (20) séparées par un nombre pair d'espaces inter-lumières (22), les gicleurs étant dirigés vers les lumières (20) et vers le cône de manière que le jet de l'huile des gicleurs (16, 18) puisse les traverser, les gicleurs étant disposés par rapport à ces lumières de telle sorte que l'un des gicleurs commence à éjecter de l'huile dans une lumière (20) au moment où le jet de l'autre gicleur commence à être réfléchi par un espace inter-lumière (22).

3. Système de dégivrage selon la revendication 2, **caractérisé en ce que** l'angle d'inclinaison du gicleur par rapport à l'axe Z-Z de l'arbre de compresseur basse pression est compris entre 5° et 30°.

4. Système de dégivrage selon l'une des revendications 1 à 3, **caractérisé en ce que** le tube d'alimentation présente une conicité comprise entre 0° et 2°, la partie de plus grand diamètre du cône étant située du côté du cône avant (26) du moteur.

5. Système de dégivrage selon l'une quelconque des revendications 1 à 4, **caractérisé en ce que** le tube d'alimentation (30) comporte un ressaut (38) dans sa partie située vers l'arbre de compresseur basse pression (12).

6. Système selon l'une quelconque des revendications 1 à 5, **caractérisé en ce qu'**il comporte une écope centrifuge (48) dont la fonction est de récupérer l'huile qui a été réfléchie par les espaces inter-lumières (22) de l'arbre basse pression (12) et de diriger cette huile vers le palier (2).

7. Turboréacteur d'avion, **caractérisé en ce qu'**il comporte un système de dégivrage à l'huile de son cône avant (26) conforme à l'une des revendications précédentes.

## Patentansprüche

1. Enteisungssystem des Bugkonus eines Flugzeug-Turbostrahltriebwerks, mit einem Lager (2) und einer hohlen Niedrigdruckverdichterwelle (12) der Achse Z-Z, welche durch das Lager in Drehung und in Anschlag gehalten wird, wobei das Lager (2) mit Öl mittels zwei Düsen (16, 18) geschmiert wird, welche sich an der Außenseite der Verdichterwelle befinden, wobei das Enteisungssystem außerdem Folgendes umfasst:
- ein fest mit dem Bugkonus (26) des Motors verbundenes Ölzuleitungsrohr (30) wobei dieses Rohr die Niedrigdruckverdichterwelle (12) mit dem Konus des Motors verbindet und einen Radius (r) aufweist;
- eine Außenhaut (28), die die Wand (26) des Bugkonus des Motors auskleidet, wobei sie einen Durchgang (29) für die Zirkulation des Öls freilässt;
- eine Mehrzahl von radialen Rohren (44) für den Ölrücklauf, die zwischen dem am weitesten von der Außenhaut bezüglich der Achse Z-Z entfernten Teil und dem Lager angeordnet sind, um den Rücklauf des Öls in Richtung des Lagers (2) zu gewährleisten;
- wobei sich der Ölrücklauf in dem Lager in einem Abstand (R) von der Achse Z-Z befindet, der größer ist als der Radius (r) des Zuführschlauches (30).

2. Enteisungssystem nach Anspruch 1, **dadurch gekennzeichnet, dass** die Niedrigdruckverdichterwelle (12) eine gerade Anzahl von Öffnungen (20) getrennt durch eine gerade Anzahl von Zwischenräumen (22) zwischen den Öffnungen aufweist, wobei die Düsen auf die Öffnungen (20) und auf den Konus derart gerichtet sind, dass der Ölstrahl der Düsen (16, 18) durch diese hindurch gelangen kann, wobei die Düsen bezüglich dieser Öffnungen so angeordnet sind, dass eine der Düsen mit dem Ausstoß des Öls in eine Öffnung (20) zu dem Zeitpunkt beginnt, wenn der Strahl der anderen Düse gerade durch einen Öffnungszwischenraum (22) abgelenkt wird.

3. Enteisungssystem nach Anspruch 2, **dadurch gekennzeichnet, dass** der Neigungswinkel der Düse bezüglich der Achse Z-Z der Niedrigdruckverdichterwelle zwischen 5° und 30° liegt.

4. Enteisungssystem nach einem der Ansprüche 1 bis 3, **dadurch gekennzeichnet, dass** das Zuleitungsrohr eine Kegelneigung zwischen 0° und 2° aufweist, wobei sich der Teil mit dem größten Durchmesser des Konus auf der Seite des Bugkonus (26) des Motors befindet.

5. Enteisungssystem nach einem der Ansprüche 1 bis 4, **dadurch gekennzeichnet, dass** das Zuleitungsrohr (30) einen Vorsprung (38) in seinem der Niedrigdruckverdichterwelle (12) zugewandten Teil aufweist.

6. Enteisungssystem nach einem der Ansprüche 1 bis 5, **dadurch gekennzeichnet, dass** es eine Zentrifugalschaufel (48) aufweist, deren Aufgabe darin besteht, das Öl, das durch die Öffnungszwischenräume (22) der Niedrigdruckwelle (12) abgelenkt worden ist, aufzufangen und dieses Öl in Richtung des Lagers (2) zu leiten.

7. Flugzeug-Turbostrahltriebwerk, **dadurch gekennzeichnet, dass** es ein Enteisungssystem mittels Öl seines Bugkonus (26) gemäß einem der vorhergehenden Ansprüche aufweist.

## Claims

1. A system for deicing the nose cone of an aircraft turbojet, comprising a bearing (2) and a hollow low-pressure compressor shaft (12) of axis Z-Z supported, in rotation and in thrust, by said bearing, said bearing (2) being lubricated with oil by means of two nozzles (16, 18) located outside the compressor shaft, said deicing system further comprising:
- a feed oil tube (30) fastened to the nose cone (26) of the engine, this tube connecting the low-pressure compressor shaft (12) to the eingine nose cone and having a radius (r);
- a skin (28) lining the wall (26) of the engine nose cone, leaving a passage (29) for circulation of the oil;
- a plurality of radial oil-return tubes (44) placed between the most eccentric part of the skin relative to the Z-Z axis and the bearing, for returning the oil to the bearing (2); and
- the return of the oil into the bearing being located at a distance (r) from the Z-Z axis larger than the radius (r) of the feed tube (30).

2. The deicing system as claimed in claim 1, wherein the low-pressure compressor shaft (12) has an even number of slots (20) separated by an even number of inter-slot spaces (22), the nozzles being directed toward the slots (20) and toward the nose cone so that the oil jet from the nozzles (16, 18) can pass through them, the nozzles being placed relative to these slots in such a way that one of the nozzles starts to eject oil into a slot (20) at the moment when the jet from the other nozzle starts to be reflected by an inter-slot space (22).

3. The deicing system as claimed in claim 2, wherein the angle of inclination of the nozzle relative to the Z-Z axis of the low-pressure compressor shaft is between 5° and 30°.

4. The deicing system as claimed in one of claims 1 to 3, wherein the feed tube has a conicity of between 0° and 2°, the largest-diameter portion of the cone being located on the engine nose cone (26) side.

5. The deicing system as claimed in any one of claims 1 to 4, wherein the feed tube (30) includes a projection (38) in its part located toward the low-pressure compressor shaft (12).

6. The system as claimed in any one of claims 1 to 5, which includes a centrifugal scoop (48), the function of which is to recover the oil that has been reflected by the inter-slot spaces (22) of the low-pressure shaft (12) and to direct this oil toward the bearing (2).

7. An aircraft turbojet, which includes a system for deicing its nose cone (26) with oil as claimed in one of the preceding claims.
